# FASCICULE DE BREVET EUROPEEN

(11) **EP 0 921 712 B1**
(45) Date de publication et mention de la délivrance du brevet: **09.02.2005**
(21) Numéro de dépôt: 98402968.6
(22) Date de dépôt: 27.11.1998
(51) Int. Cl.: H05B 6/68, H02M 3/335

(54) **Dispositif d'alimentation d'une charge non linéaire notamment un magnétron d'un four à micro-ondes**
Versorgungseinrichtung für eine nichtlineare Last, insbesondere ein Magnetron eines Mikrowellenofens
Power-supply for a non linear load, especially for the magnetron of a microwave oven

(30) Priorité: 05.12.1997 FR 9715427
(43) Date de publication de la demande: 09.06.1999
(73) Titulaire: STMicroelectronics S.A., 92120 Montrouge (FR)
(72) Inventeur: Le Van Suu, Maurice, 75116 Paris (FR)
(74) Mandataire: Ballot, Paul

(56) Documents cités:
- EP-A- 0 433 158
- EP-A- 0 690 551
- FR-A- 2 680 297
- US-A- 5 208 432
- LIU J ET AL: "A NEW MICROWAVE POWER SOURCE AND ITS APPLICATION" 1996 IEEE MTT-S INTERNATIONAL MICROWAVE SYMPOSIUM DIGEST, SAN FRANCISCO, JUNE 17 - 21, 1996, vol. VOL. 1, 17 juin 1996, pages 61-63, XP000704864 RANSON R G (ED )

## Description

La présente invention se rapporte à un dispositif d'alimentation d'une charge non linéaire, notamment un magnétron d'un four à micro-ondes.

Un magnétron est un transducteur qui, lorsqu'il est alimenté sous une haute tension d'alimentation de l'ordre de 1000 volts, produit un rayonnement d'ondes à très haute fréquence. Ce rayonnement est avantageusement utilisé pour provoquer une agitation moléculaire dans un corps solide ou liquide. Le magnétron est ainsi l'organe principal des fours dits "fours à micro-ondes" utilisant le principe d'agitation thermique pour le réchauffement voire la cuisson des aliments. Il s'agit notamment des fours pour application domestique.

Or, les équipements électroménagers étant alimentés par une basse tension d'alimentation qui, en Europe, est une tension alternative d'amplitude V₀ égale à 220 volts et de fréquence f₀ égale à 50 hertz, il faut prévoir un dispositif d'alimentation du magnétron.

On connaît de tels dispositifs comportant un transformateur résonant qui comprend un interrupteur commandé (au primaire du transformateur) pour délivrer (au secondaire du transformateur) une haute tension d'alimentation aux bornes de la charge à partir de la basse tension d'alimentation (disponible au primaire).

Le circuit primaire du transformateur comporte à cet effet des moyens de filtrage présentant une fréquence de résonance égale à la fréquence d'excitation du transformateur.

L'interrupteur est commandé par un signal de commande dont un paramètre est réglé pour asservir la quantité d'énergie transmise au secondaire c'est à dire, par voie de conséquence, la puissance que l'on peut fournir à la charge. Ce paramètre peut être une fréquence, un rapport cyclique, ou tout autre grandeur que l'on peut commander de manière déterministe.

En fonctionnement normal, le magnétron absorbe une puissance de l'ordre de 1500 watts. Il nécessite une haute tension d'alimentation pouvant varier entre 800 et 1200 volts, avec une valeur moyenne de l'ordre de 1000 volts typiquement. Le courant moyen est de l'ordre de 8 ampères avec des surtensions pouvant atteindre 40 A.

On cherche actuellement à réduire la taille du transformateur du dispositif d'alimentation. En effet, les enroulements de ce transformateur sont bobinés avec des fils de cuivre. Or l'évolution du coût des matières premières fait du cuivre un matériau de plus en plus cher. De plus, le transformateur reste encore trop volumineux pour permettre la réalisation de four micro-ondes véritablement compacts.

Cependant, la réduction de la taille des transformateurs est limitée par la nécessité de disposer d'une masse de cuivre suffisante pour dissiper la chaleur générée, notamment du fait des pertes résultant de la saturation du matériau magnétique du transformateur.

La présente invention a pour objet un dispositif d'alimentation d'une charge non linéaire, notamment mais pas nécessairement un magnétron pour four micro-ondes, qui permet de résoudre les problèmes susmentionnés rencontrés dans les dispositifs de l'art antérieur.

A cet effet, l'invention propose un dispositif du type précité, qui comprend :
- des moyens délivrant un signal de mesure du niveau de la haute tension d'alimentation ;
- des moyens délivrant un signal de mesure du niveau de la basse tension d'alimentation ;
- des moyens délivrant un signal de mesure de la température ambiante du transformateur ;
- une unité de gestion à logique floue qui accepte lesdits signaux de mesure comme variables d'entrée et produit comme variable de sortie la valeur d'un paramètre d'un signal de commande de l'interrupteur commandé, ladite unité étant pilotée par un algorithme à logique floue qui comporte un premier jeu de règles de cohérence permettant d'augmenter ledit paramètre lorsque la basse tension d'alimentation diminue et réciproquement, et un deuxième jeu de règles de cohérence permettant de diminuer ledit paramètre lorsque la température ambiante augmente, et réciproquement.

Par température ambiante du transformateur, on entend selon l'invention la température du volume d'air entourant immédiatement le transformateur. Un capteur de température sera donc disposé à proximité immédiate du transformateur, et notamment du matériau magnétique (noyau de ferrite) de celui-ci.

Or, toute élévation de cette température peut être attribuée au fait que le matériau magnétique est saturé et s'échauffe. Grâce à l'invention, dès qu'une telle élévation de température est détectée, elle est prise en compte pour modifier la commande de l'interrupteur de commande de manière à diminuer la quantité d'énergie stockée dans le matériau magnétique entre chaque cycle de transfert d'énergie du primaire vers le secondaire.

On peut ainsi réaliser un transformateur qui dissipe moins de chaleur et qui peut, dès lors, être de taille réduite.

De, plus, le fait de recourir à une unité de gestion à logique floue présente de nombreux avantages. En effet, le magnétron étant une charge non linéaire, l'asservissement de la puissance fournie au magnétron à l'aide d'une commande en tension (commande de la haute tension d'alimentation appliquée à ses bornes) n'est pas facile à réaliser avec un dispositif d'alimentation asservi classique, tel qu'un asservissement de type P.I.D. (Proportionnel Intégral Différentiel).

Avec une gestion à base de logique floue, ni une modélisation précise du système complet constitué par le dispositif lui-même et sa charge, ni un réglage particulier à chaque exemplaire du produit pour tenir compte des dispersions de caractéristique des composants utilisés, ne sont nécessaires.

De plus, et c'est là aussi un avantage inhérent à la logique floue, aucune variation ultérieure des caractéristiques de fonctionnement du dispositif ou de sa charge (due au vieillissement des composants par exemple) n'est susceptible de perturber son fonctionnement, dans la mesure où la régulation se fait à l'aide de règles de décision qui présentent un caractère général.

En outre, la particularité de l'invention consistant à utiliser une unité de gestion à logique floue se combine bien avec la particularité précédente consistant à tenir compte de la température ambiante du transformateur, dans la mesure où il n'est pas non plus nécessaire pour le concepteur de modéliser le comportement en température du transformateur lors de la réalisation du dispositif d'alimentation.

Selon une autre caractéristique de l'invention, le signal de commande de l'interrupteur commandé est un signal modulé en largeur d'impulsion et le paramètre de sortie de l'unité de gestion à logique floue est la valeur du rapport cyclique de ce signal.

Ceci présente l'avantage de la simplicité, dans la mesure où le rapport cyclique d'un signal modulé en largeur d'impulsion peut facilement être commandé au sein d'une unité de gestion numérique comme l'est par exemple un microcontrôleur à logique floue.

D'autres caractéristiques et avantages de l'invention apparaîtront encore à la lecture de la description qui va suivre. Celle-ci est purement illustrative et doit être lue en regard des dessins annexés sur lesquels on a représenté:
- à la figure 1: un mode de réalisation d'un dispositif d'alimentation d'un magnétron conforme à l'invention;
- à la figure 2: une courbe montrant la basse tension d'alimentation après redressement;
- à la figure 3: une courbe montrant une période du signal de commande de l'interrupteur commandé;
- à la figure 4: un schéma électrique équivalent d'un magnétron en fonctionnement normal;
- à la figure 5: l'allure de la caractéristique courant/tension d'un magnétron;
- à la figure 6: un exemple de l'allure des fonctions d'appartenance des variables floues de l'unité de gestion selon l'invention;
- à la figure 7 : une table de règles de cohérence mises en oeuvre par un algorithme à logique floue selon l'invention.

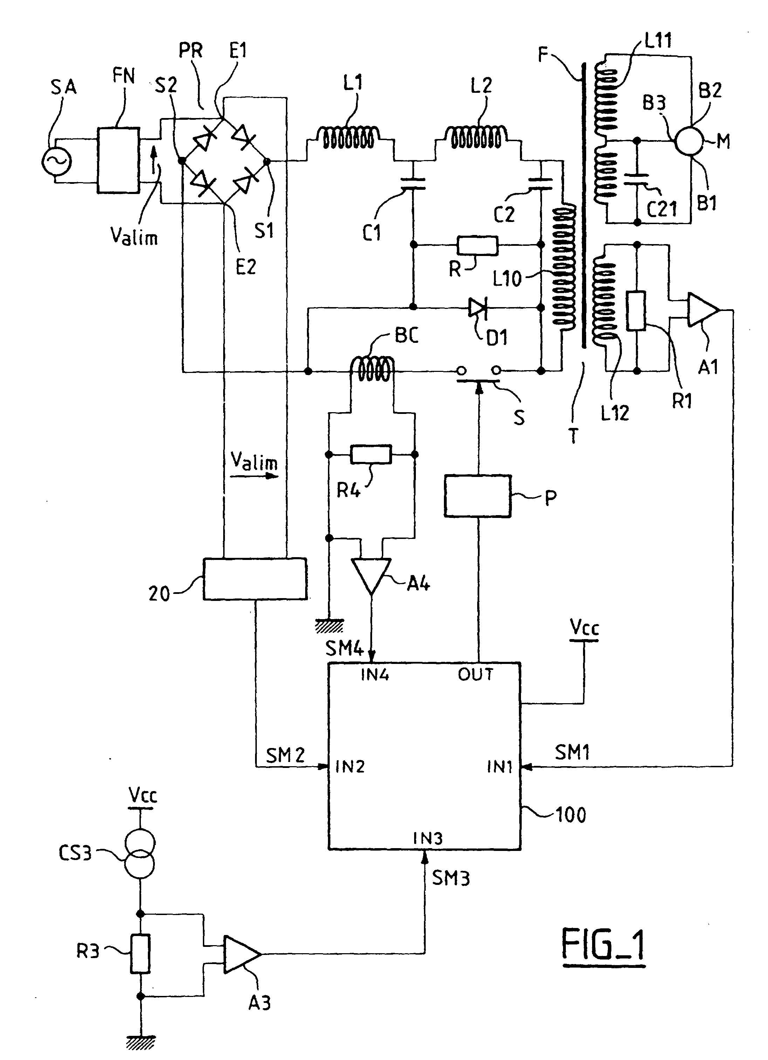

A la figure 1 on a représenté un mode de réalisation d'un dispositif d'alimentation d'une charge non linéaire selon le principe de l'invention.

Ce dispositif comprend un transformateur T fonctionnant en transformateur résonant. Dans ce qui suit, on distingue le primaire et le secondaire du transformateur.

Au primaire, une basse tension d'alimentation Valim est générée à partir de la tension délivrée par une source SA de tension d'alimentation alternative (par exemple la tension secteur du réseau électrique public), après filtrage au moyen d'un circuit de filtrage FN pour éliminer l'effet des perturbations présentes sur le secteur.

La tension Valim est transmise sur des entrées E1 et E2 d'un pont redresseur PR qui comporte quatre diodes. Un tel pont redresseur permet, ainsi qu'il est connu par l'homme du métier, un redressement double alternance de la tension Valim.

Une première sortie S1 du pont redresseur PR est connectée à une première borne d'une inductance L1 dont la seconde borne est reliée d'une part à la première borne d'une deuxième inductance L2 et d'autre part à une première armature d'un condensateur C1. La seconde borne de l'inductance L2 est reliée, d'une part, à une première armature d'un second condensateur C2 et, d'autre part, à une première extrémité de l'enroulement primaire L10 du transformateur T.

Les secondes armatures des condensateurs C1 et C2 sont respectivement connectées à la première et à la seconde borne d'une résistance R. Les inductances L1 et L2, les condensateurs C1 et C2, et la résistance R fonctionnent en filtre résonant. Leurs valeurs sont déterminées en fonction de la fréquence d'excitation du transformateur pour assurer la résonance du circuit primaire du transformateur.

Une diode de roue libre D1 est connectée en parallèle sur la résistance R, son anode étant connectée du côté de C1 et sa cathode du côté de C2. L'anode de la diode D1 est également connectée à la sortie S2 du pont redresseur PR.

La seconde sortie S2 du pont redresseur PR est connectée à la seconde extrémité de l'enroulement primaire L10 du transformateur T à travers un interrupteur commandé S. Les cycles successifs d'ouverture et de fermeture de cet interrupteur S déterminent la fréquence d'excitation du transformateur.

Au secondaire du transformateur T, on trouve une charge, qui peut notamment mais non nécessairement être un magnétron M. Le magnétron est connecté par une première borne à une première extrémité de l'enroulement secondaire L11 du transformateur T et connecté par une seconde borne B2 à l'autre extrémité dudit enroulement secondaire L11. Un noeud intermédiaire de l'enroulement L11 est en outre connecté à une troisième entrée B3 du magnétron M. Enfin, un condensateur C21 de démarrage est connecté entre la première et la troisième entrée, respectivement B1 et B3, du magnétron M. La fonction de ce condensateur de démarrage apparaîtra dans la suite de l'exposé.

Le fonctionnement du dispositif d'alimentation ainsi décrit est le suivant. Lorsque l'interrupteur de puissance S est fermé, un courant circule à travers les inductances L1 et L2 et l'enroulement primaire L10, depuis le noeud S1 vers le noeud S2. Le circuit magnétique du transformateur T, comportant un matériau magnétique comme un noyau de ferrite F, se charge alors en énergie électromagnétique. La diode D1 est alors bloquée.

Lorsqu'on ouvre l'interrupteur commandé S, l'énergie électromagnétique emmagasinée dans le noyau de ferrite F est brutalement transférée dans l'enroulement secondaire L11 du transformateur. Un courant de décharge peut alors circuler dans l'enroulement primaire L10 dans le sens contraire au sens précédent, à travers la diode de roue libre D1 devenue passante. La diode D1 permet donc une démagnétisation rapide de l'enroulement primaire L10 à l'ouverture de l'interrupteur commandé S.

La fréquence des cycles d'ouverture et de fermeture de l'interrupteur S, de même que le rapport du temps pendant lequel cet interrupteur est fermé au cours d'une période du signal de commande de cet interrupteur S, déterminent la quantité d'énergie transférée au secondaire du transformateur T, et donc la valeur de la puissance transmise au magnétron. Celui-ci est commandé en tension, via la haute tension d'alimentation Vm appliquée entre sa première et sa deuxième borne, respectivement B1 et B2.

Le dispositif comporte une unité de gestion 100. Selon l'invention, il s'agit d'un circuit à logique floue, tel que le microcontrôleur WARP 3 commercialisé par la société SGS-THOMSON MICROELECTRONICS. Un tel circuit est alimenté par une tension d'alimentation Vcc de 5 volts. Il comprend au moins quatre entrées IN1, IN3, IN2 et IN4, qui acceptent des signaux analogiques dont l'amplitude ne dépasse pas cette tension d'alimentation. Un convertisseur analogique-numérique est compris dans le circuit 100 immédiatement après chacune des entrées précitées pour convertir les signaux reçus sur ces entrées en signaux numériques pouvant être traités par le circuit.

Le dispositif d'alimentation de la figure 1 comprend des moyens de mesure de la haute tension d'alimentation Vm du magnétron M. Ces moyens comprennent un enroulement auxiliaire L12 disposé au secondaire du transformateur T, aux bornes duquel est connectée une résistance de mesure R1. Les bornes de la résistance R1 sont en outre connectées sur les entrées d'un amplificateur différentiel A1 produisant un signal de mesure SM1 de la haute tension d'alimentation Vm.

La tension Vm est susceptible de varier dans une plage de variation comprise entre 800 et 1200 volts, autour d'une valeur moyenne de 1000 volts. Le rapport entre le nombre de spires de l'enroulement secondaire L11 du transformateur T et le nombre de spires de l'enroulement auxiliaire L12 est de l'ordre de 250. Ainsi, l'amplitude du signal de mesure SM1 ne dépasse pas 5 volts.

Le dispositif de la figure 1 comporte en outre des moyens de mesure de la basse tension d'alimentation Valim. Ces moyens comprennent un circuit translateur de niveau 20 dont les entrées sont connectées en parallèle sur les entrées E1 et E2 du pont redresseur PR. Le circuit translateur de niveau est par exemple un pont de résistances ("pont diviseur") permettant de ramener l'amplitude de la basse tension d'alimentation à un niveau inférieur à la tension d'alimentation Vcc du microcontrôleur 100, c'est à dire 5 volts. La sortie du circuit 20 délivre ainsi un deuxième signal de mesure SM2, qui est un signal de mesure de la basse tension d'alimentation Valim. Ce signal est transmis sur la deuxième entrée IN2 du microcontrôleur 100.

Le dispositif comporte encore des moyens de mesure de la température ambiante, produisant un troisième signal de mesure SM3 qui est transmis sur la troisième entrée IN3 du microcontrôleur 100. Ces moyens comprennent une résistance R3 dont la valeur est dépendante de la température, disposée en série avec une source de courant CS3 entre la tension d'alimentation Vcc et la masse. La résistance R3 est parcourue par un courant constant généré par la source CS3. La résistance R3 est par exemple une résistance de type CTN (résistance à coefficient de température négatif) ou de type CTP (résistance à coefficient de température positif). Les bornes de la résistance R3 sont reliées aux entrées d'un amplificateur différentiel A3 dont la sortie délivre le signal de mesure SM3. La valeur de la résistance R3 est telle que l'amplitude du signal de mesure SM3 est au plus égale à la tension d'alimentation Vcc du microcontrôleur 100, à savoir 5 volts.

Par température ambiante, on entend ici, selon l'invention, la température à proximité immédiate du transformateur T et de sa charge constituée par le magnétron M.

Enfin, le dispositif peut également, mais non nécessairement, comprendre des moyens de mesure du courant circulant à travers l'interrupteur commandé S. Ces moyens comportent un dispositif dénommé "paire ampèremétrique" comprenant une boucle de courant BC enroulée autour de la branche de circuit comportant l'interrupteur commandé S, dont les extrémités sont reliées aux bornes d'une résistance de mesure R4. Un courant proportionnel au courant circulant dans la branche est induit dans la boucle de courant BC et génère une différence de potentiel aux bornes de la résistance R4. Les bornes de la résistance R4 sont en outre connectées aux bornes d'entrée d'un amplificateur différentiel A4 délivrant un signal de mesure SM4, qui est un signal de mesure du courant circulant dans l'interrupteur commandé S. Le signal SM4 est fourni sur la quatrième entrée IN4 du microcontrôleur 100. L'une ou l'autre (en fonction du sens d'enroulement de la boucle de courant BC) des bornes d'entrée de l'amplificateur différentiel A4 est en outre connectée à la masse. La valeur de la résistance R4 est déterminée de manière à ce que l'amplitude du signal de mesure SM4 soit au plus égale à la tension d'alimentation du microcontrôleur 100, à savoir 5 volts.

L'interrupteur commandé S est préférentiellement un transistor MOS de puissance. Le signal de commande qui est appliqué sur la grille de commande de ce transistor pour déterminer son état passant ou bloqué (état fermé ou ouvert de l'interrupteur commandé), est généré par une sortie OUT du microcontrôleur 100. Lorsque ce signal est à l'état logique 1, le transistor MOS est passant. Lorsqu'il est à l'état logique 0, le transistor MOS est bloqué. Ce signal est transmis à la grille du transistor MOS par l'intermédiaire d'un circuit de puissance P. Un tel circuit de puissance est destiné à fournir un courant suffisant pour charger rapidement la capacité de grille du transistor lorsque le signal de commande passe à la valeur logique 1 et pour la maintenir chargée aussi longtemps que l'interrupteur doit rester dans un état fermé, et également à provoquer la décharge rapide de cette capacité lorsque le signal de commande passe à la valeur logique 0. Le circuit de puissance P a donc pour fonction d'assurer une commutation rapide du transistor MOS de puissance de l'état passant vers l'état bloqué et réciproquement. Un tel circuit est à la portée de l'homme du métier. Ne faisant pas partie des moyens essentiels de l'invention, il ne sera pas décrit en lui-même.

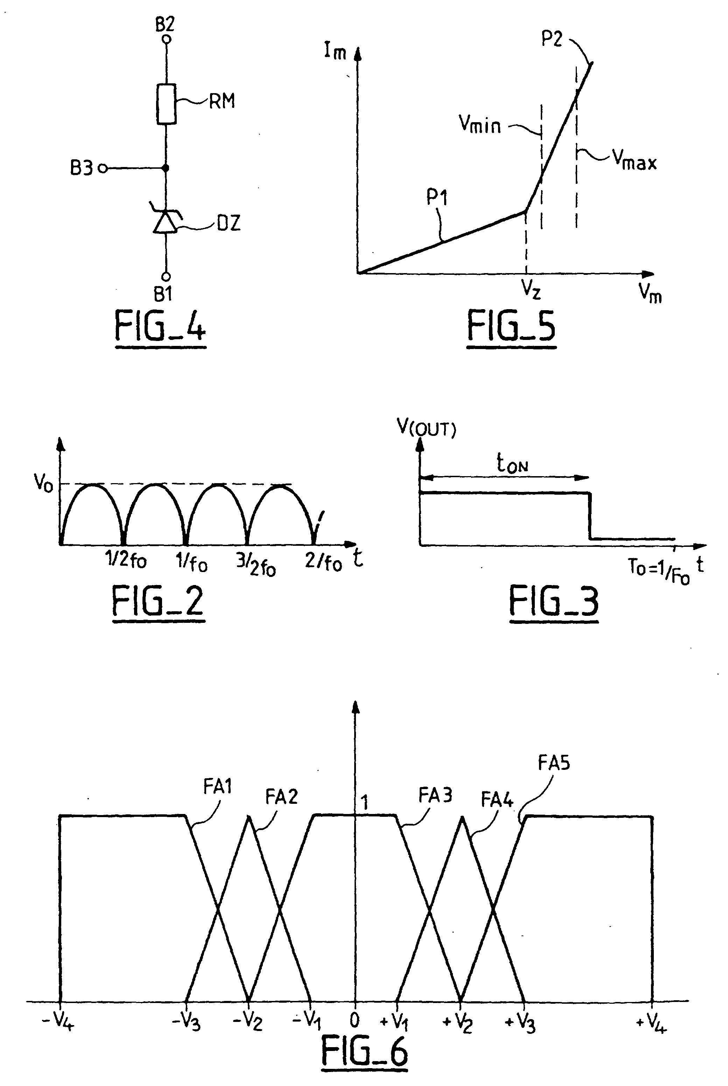

Le principe du fonctionnement d'un dispositif d'alimentation par transformateur résonant tel que décrit à la figure 1 sera mieux compris à la lumière des explications qui vont suivre, qui doivent être lues en regard des figures 2 et 3.

A la figure 2, on a représenté une courbe montrant l'allure de la basse tension d'alimentation, telle qu'elle est disponible entre les bornes des sorties S1 et S2 du pont redresseur PR. Il s'agit en fait de la tension Valim dont les deux alternances ont été redressées. Le signal représenté à la figure 2 est un signal périodique de période 1/(2 x f₀), où on rappelle que f₀ est la fréquence de la basse tension d'alimentation Valim. En Europe, la basse tension d'alimentation délivrée par le secteur a une fréquence f₀ qui vaut 50 hertz.

Afin de limiter la taille du transformateur T, la commutation de l'interrupteur commandé S est commandée à une fréquence F₀ d'excitation du transformateur, dont la valeur est très élevée par rapport à la fréquence f₀ de la basse tension d'alimentation. Dans un exemple, cette fréquence F₀ du signal de commande de l'interrupteur commandé S est de l'ordre de 70 kilohertz.

Préférentiellement, le signal de commande de l'interrupteur commandé S généré par le microcontrôleur 100 sur sa sortie OUT est un signal périodique modulé en largeur d'impulsion, visible à la figure 3. Ce signal est à l'état logique 1 pendant une partie t_{ON} de sa période T₀, où T₀=1/F₀. Pendant la durée t_{ON}, l'interrupteur commandé S est fermé, et pendant le reste de la période, il est ouvert. Un paramètre du signal de commande de l'interrupteur commandé S est déterminé par le rapport cyclique µ du signal V(OUT) de commande délivré par la sortie OUT du circuit 100. Ce rapport cyclique µ est déterminé par le rapport du temps pendant lequel l'interrupteur est fermé à la durée totale d'une période. Dit autrement, µ est tel que µ=t_{ON}/T₀.

Afin de tenir compte de l'évolution de l'amplitude de la tension redressée disponible entre les sorties S1 et S2 du pont redresseur PR, qui varie selon la courbe visible à la figure 2, le rapport cyclique µ du signal de commande de l'interrupteur commandé S doit être adapté en permanence, de manière à maintenir constante la valeur de la haute tension d'alimentation Vm délivrée au secondaire du transformateur T.

Comme on l'aura compris, le paramètre du signal de commande de l'interrupteur commandé S constitué par le rapport cyclique µ détermine la valeur de la haute tension d'alimentation Vm délivrée aux bornes de l'enroulement secondaire L11 et appliquée entre les bornes B1 et B2 du magnétron M. La difficulté de l'asservissement de la haute tension d'alimentation Vm à l'aide de ce paramètre réside dans le fait que ni la charge du transistor MOS de puissance constituée par le transformateur T, ni surtout la charge de celui-ci constituée par le magnétron M, ne présentent des caractéristiques linéaires.

A la figure 4, on a par exemple donné un schéma équivalent du magnétron M en fonctionnement normal. Il s'agit d'un schéma électrique simplifié du magnétron qui peut constituer une modélisation satisfaisante de celui-ci en fonctionnement normal. Ce schéma équivalent comporte une résistance RM connectée entre la deuxième et la troisième borne du magnétron respectivement B2 et B3, ainsi qu'une diode Zener DZ connectée par sa cathode à la troisième borne B3 et par son anode à la première borne B1 du magnétron. Dit autrement, le magnétron est, en mode normal, équivalent à une diode Zener DZ connectée par sa cathode à une résistance RM, en série entre sa première et sa deuxième borne d'entrée respectivement B1 et B2, la borne d'entrée B3 étant en outre constituée par le noeud commun à ces deux composants.

A la figure 5, on a représentée schématiquement l'allure de la caractéristique courant/tension du magnétron M en fonctionnement normal. A l'axe des abscisses, on a représenté la tension Vm qui est la haute tension d'alimentation du magnétron. A l'axe des ordonnées, on a représenté le courant Im circulant entre les bornes d'entrée B1 et B2 du magnétron. La caractéristique comporte une première portion P1 pour les faibles valeurs de la tension Vm, qui présente une première pente positive. Pour des tensions Vm supérieures à une tension seuil V_{Z}, la caractéristique comporte une seconde portion P2 ayant une seconde pente positive supérieure à celle de la portion P1. La tension de seuil V_{Z} est égale à la tension de seuil de la diode Zener DZ du schéma équivalent de la figure 4.

La fonction du condensateur de démarrage C21 (mentionné plus haut) qui est connecté entre les bornes B1 et B3 du magnétron, est de diminuer l'impédance entre ces bornes pour les faibles valeurs de la tension Vm (au démarrage).

On notera que, en mode de fonctionnement normal, la haute tension d'alimentation Vm doit être maintenue entre deux valeurs limites Vmin et Vmax pour que le magnétron émette des micro-ondes. C'est à l'intérieur de cette plage de variation que l'asservissement de la tension Vm doit avoir lieu, de manière à tenir compte d'une part de l'évolution du niveau de la basse tension d'alimentation Valim, et d'autre part de la température ambiante du transformateur. Cet asservissement est réalisé selon l'invention selon un algorithme à logique floue, ainsi qu'il va maintenant être décrit.

Le microcontrôleur à logique floue 100 accepte des variables d'entrées qui sont au moins au nombre de trois. Il s'agit de :
- la variable VHT qui est le niveau de la haute tension d'alimentation Vm délivrée au secondaire du transformateur T ;
- la variable VBT qui est la basse tension d'alimentation Valim disponible au primaire du transformateur T ;
- la variable TEMP qui est la température ambiante du transformateur.

D'autre variables d'entrée peuvent également être prises en compte dans l'algorithme flou, afin notamment d'assurer la protection du dispositif d'alimentation contre certains dysfonctionnements. Notamment, un mode de réalisation particulier de l'invention qui sera décrit plus loin, propose de tenir compte également du courant circulant à travers l'interrupteur commandé afin éventuellement de limiter celui-ci pour protéger le transistor MOS constituant l'interrupteur. Le microcontrôleur 100 accepte alors également une variable d'entrée C correspondante.

Chacune de ces variables d'entrée est une variable analogique, dans la mesure où elle provient d'un des signaux de mesure respectivement SM1, SM2 ou SM3 (et éventuellement SM4 pour la variable C) présentés ci-dessus. Ces signaux sont transmis sur une des entrées respectivement IN1, IN2 et IN3 (et éventuellement IN4 pour le signal SM4 correspondant à la variable C) du microcontrôleur 100. Le niveau de ces signaux analogiques est converti en une valeur numérique par le convertisseur analogique numérique de chaque entrée IN1 à IN4, pour que la valeur numérique de la variable correspondante soit traitée dans le microcontrôleur à logique floue 100.

Celui-ci délivre en outre une variable de sortie MU qui, selon l'invention, correspond à un paramètre du signal de commande de l'interrupteur commandé. Ainsi qu'il a été dit, ce paramètre est préférentiellement le rapport cyclique µ du signal de commande, celui-ci étant un signal modulé en largeur d'impulsion. La valeur de la variable de sortie MU est déterminée en fonction de la valeur des variables d'entrée selon l'algorithme à logique floue mis en oeuvre dans le microcontrôleur 100

Pour chacune des variables d'entrées et pour la variable de sortie, un nombre déterminé de fonctions d'appartenance est défini dans une mémoire du microcontrôleur 100. Dans un exemple, pour chaque variable, on dispose de cinq fonctions d'appartenance. Ce nombre est suffisant pour permettre une gestion efficace du dispositif d'alimentation, sans pour autant requérir ni une capacité de mémorisation à l'intérieur du microcontrôleur 100 ni une complexité de l'algorithme (et donc un temps de traitement) qui soient excessives.

A la figure 6, on a représenté une allure possible des cinq fonctions d'appartenance FA1 à FA5 couvrant la totalité de la dynamique de la variable considérée. On rappelle que les fonctions d'appartenance FA1 à FA5 définissent, pour la variable floue considérée, la valeur d'un coefficient caractérisant la vraisemblance de l'appartenance de cette variable à un ensemble de valeurs (dit "ensemble flou") défini de manière approximative par une valeur floue du type, respectivement, "TRES PETIT", "PETIT", "NORMAL", "GRAND" et "TRES GRAND".

A la figure 6, la dynamique de variation a été centrée sur la valeur moyenne de la variable, qui à la figure coïncide avec l'origine des axes. De plus, la valeur des coefficients de vraisemblance à été normée à 1. Pour chaque variable, on compte ainsi :
- une première fonction d'appartenance FA1, qui définit un ensemble de valeurs pour lequel la variable est affectée de la valeur floue "TRES PETIT" ; cette fonction est plate et vaut l'unité entre la valeur -V4 et la valeur -V3, puis décroît linéairement à partir de cette valeur pour s'annuler à la valeur -V2 ;
- une deuxième fonction d'appartenance FA2, qui définit un ensemble de valeurs pour lequel la variable est affectée de la valeur floue "PETIT" ; cette fonction croît linéairement en partant de 0 à la valeur -V3 pour atteindre l'unité à la valeur -V2, au delà de laquelle elle décroît linéairement pour s'annuler à nouveau à la valeur -V1 ;
- une troisième fonction d'appartenance FA3, qui définit un ensemble de valeurs pour lequel la variable est affectée de la valeur floue "NORMAL" ; cette fonction croît linéairement en partant de 0 à la valeur -V2 pour atteindre l'unité à la valeur -V1 ; elle est ensuite constante et vaut l'unité entre la valeur -V1 et la valeur symétrique +V1 au delà de laquelle elle décroît linéairement pour s'annuler à nouveau à la valeur +V2 ;
- une quatrième fonction d'appartenance FA4, qui définit un ensemble de valeurs pour lequel la variable est affectée de la valeur floue "GRAND" ; cette fonction croît linéairement en partant de 0 à la valeur +V1 pour atteindre l'unité à la valeur +V2, au delà de laquelle elle décroît linéairement pour s'annuler à nouveau à la valeur +V3 ;
- enfin, une cinquième fonction d'appartenance FA5, qui définit un ensemble de valeurs pour lequel la variable est affectée de la valeur floue "TRES GRAND" ; cette fonction croît linéairement en partant de 0 à la valeur +V2 pour atteindre l'unité à la valeur +V3, au delà de laquelle elle reste constante.

Ainsi qu'on l'a compris les fonctions FA5 et FA4 sont symétriques des fonctions FA1 et FA2 respectivement, par rapport à l'axe des ordonnées, alors que la fonction FA3 est elle-même symétrique par rapport à cet axe.

Cependant, ceci n'est qu'un exemple et il est bien entendu que la forme des fonctions d'appartenance peut être quelconque. En particulier, on sait que des courbes gaussiennes (en forme de cloche) peuvent procurer une meilleure définition des ensembles flous que des courbes comportant des segments de droite (courbes à lignes brisées).

L'avantage de la forme des fonctions d'appartenance représentées à la figure 6 réside dans le fait que ces fonctions peuvent être mémorisées dans la mémoire du microcontrôleur 100 par la seule mémorisation des valeurs remarquables V1, V2, V3 et V4 définissant les limites des ensembles flous. Cela requiert donc un faible espace mémoire.

De plus, pour chaque variable du système physique, ces valeurs remarquables des fonctions d'appartenance peuvent être déterminées à l'aide d'un logiciel de génération automatique, tel que l'outil de développement de systèmes à logique floue proposé par la société SGS-THOMSON sous le nom de "AFM & FUZZYSTUDIO". Cette génération automatique est réalisée en usine, après le montage complet de l'appareil (ici un four micro-ondes). Cette façon de procéder est avantageuse car, d'une part il n'est pas nécessaire de modéliser un système par définition non linéaire pour mettre au point son unité de gestion, et, d'autre part, il n'est pas non plus nécessaire de tenir compte des dispersions de caractéristique des composants utilisés pour sa fabrication.

A titre indicatif seulement, on donne ci-dessous un ordre de grandeur de la dynamique de variation des grandeurs physiques correspondant aux variables d'entrée du microcontrôleur :
- la haute tension d'alimentation (variable VHT) varie entre 800 et 1200 volts avec une valeur moyenne de 1000 volts ;
- la basse tension d'alimentation (Variable VBT) varie entre -230 et +230 volts;
- la température ambiante du transformateur (variable TEMP) varie entre 10 et 90 degrés Celsius (°c) avec une température normale de l'ordre de 40 degrés Celsius;

En outre la variable de sortie, qui est la valeur du rapport cyclique µ du signal de commande de l'interrupteur commandé S, varie par exemple entre 0,2 et 0,8 avec une valeur moyenne égale à 0,5.

Avec un microcontrôleur 8 bits, la dynamique de variation de chaque variable est subdivisée en 256 valeurs numériques différentes. Une valeur numérique d'un signal d'entrée du microcontrôleur peut appartenir à plusieurs fonction d'appartenance (au maximum deux avec les courbes données en exemple à la figure 6). C'est pourquoi, à chaque valeur numérique déterminée d'une variable est associé un coefficient de vraisemblance de l'appartenance de cette valeur à chacun des ensembles flous définis par les fonctions d'appartenance associées à cette variable. On sait que, pour chaque valeur déterminée d'une variable, la somme des coefficients de vraisemblance est égale à l'unité.

La sortie OUT du microcontrôleur 100 délivre un signal périodique modulé en largeur d'impulsion dont le rapport cyclique est déterminé à l'aide de l'algorithme à logique floue mis en oeuvre par le microcontrôleur à logique floue 100.

Ainsi qu'il est connu de l'homme du métier, un tel algorithme est basé sur la vérification d'un certain nombre de règles, dites règles de cohérence, qui relient entre elles la variable de sortie d'une part, et les variables d'entrée d'autre part.

Chaque règle établit une décision quant à la valeur floue de la variable de sortie sur la base de la valeur floue de une ou plusieurs des variables d'entrée, avec une syntaxe logique du type :
SI <E1> ET SI <E2> ALORS <E3>
où E1 et E2 sont des expressions constatant le cas échéant le fait qu'une variable d'entrée a une valeur floue donnée, par exemple PETIT ou GRAND, et où E3 est une expression donnant à la variable de sortie (ici le rapport cyclique µ) une certaine valeur logique floue.

Dans l'algorithme de logique floue, les règles de cohérence sont successivement vérifiées avec les valeurs floues des variables d'entrées et leur coefficient de vraisemblance associés, pour en déduire une valeur floue de la variable de sortie avec un coefficient de vraisemblance qui peut être la moyenne arithmétique ou le minimum des coefficients de vraisemblance précités (selon que l'on utilise la méthode dite de la moyenne ou la méthode dite du minimum). Enfin la valeur numérique de la variable de sortie est déterminée comme la somme des valeurs numériques correspondant à chaque valeur floue pondérée par le ou les coefficients de vraisemblance qui lui ont été associés en fonction des règles de cohérence.

Le microcontrôleur 100 comporte des moyens pour, à partir de la valeur numérique de la variable de sortie, c'est à dire ici du rapport cyclique du signal de commande, générer un signal périodique modulé en largeur d'impulsion avec ledit rapport cyclique.

Avec trois variables d'entrée pour chacune desquelles on définit cinq fonctions d'appartenance (cinq ensembles flous de valeurs), on peut théoriquement écrire cent vingt cinq règles de cohérences différentes. En fait, certaines règles ayant une probabilité tellement faible d'être vérifiées, il est possible de ne pas les prendre en compte. Ceci permet d'alléger d'autant la mémoire du microcontrôleur dans laquelle ces règles sont sauvegardées. En outre, le nombre de calculs à effectuer étant ainsi réduit, le déroulement de l'algorithme à logique floue est plus rapide.

Selon l'invention, le microcontrôleur 100 prend en compte une mesure de la haute tension d'alimentation Vm et une mesure de la basse tension d'alimentation Valim, pour définir le rapport cyclique µ du signal de commande de l'interrupteur commandé S.

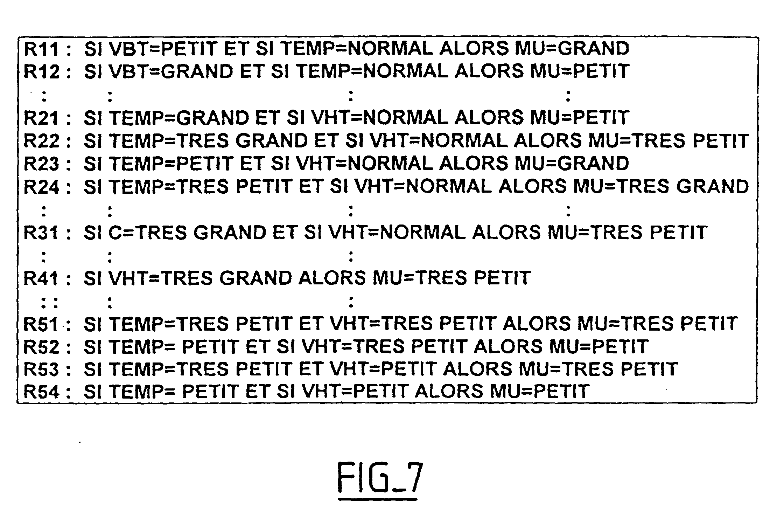

A cet effet, l'algorithme comporte notamment un jeu de règles de cohérence telles que les règles R11 et R12 visibles dans la table de règles de la figure 7. La fonction de ces règles est de modifier le paramètre µ en fonction de l'évolution du niveau de la basse tension d'alimentation Valim (à température ambiante constante). Plus particulièrement la modification du paramètre µ est une variation en sens inverse de la variation de la basse tension d'alimentation Valim. C'est à dire que le paramètre µ est augmenté lorsque la tension Valim diminue et réciproquement.

La valeur normale du rapport cyclique µ est telle que le transformateur délivre au secondaire une haute tension d'alimentation Vm nécessaire et suffisante pour que le magnétron fonctionne à la puissance voulue (de l'ordre de 1500 watts).

En outre, selon l'invention, le microcontrôleur 100 prend également en compte une mesure de la température ambiante du transformateur T pour définir le rapport cyclique µ du signal de commande de l'interrupteur commandé S.

A cet effet, l'algorithme comporte un autre jeu de règles de cohérence R21 à R24 visibles dans la table de règles de la figure 7. La fonction de ces règles est de modifier le paramètre µ en fonction de l'évolution de la température ambiante. Plus particulièrement la modification consiste à diminuer la valeur du paramètre *µ* lorsque (pour une valeur de la haute tension d'alimentation Vm déterminée) la température ambiante du transformateur augmente (ce qui traduit une saturation de son noyau de matériau magnétique F), et réciproquement.

La température normale du transformateur étant telle que celui-ci transfère le maximum d'énergie possible du primaire vers le secondaire sans pour autant qu'il y ait saturation du matériau magnétique, on fait ainsi en sorte que le transformateur travaille avec le meilleur rendement possible. En conséquence, il peut être conçu avec les dimensions les plus petites compatibles avec les autres données physiques du dispositif.

On voit que, grâce à l'algorithme à logique floue mis en oeuvre par l'unité de gestion 100, on parvient à maintenir le dispositif d'alimentation dans des conditions de fonctionnement proches des conditions normales, à savoir une puissance délivrée au magnétron correspondant à sa puissance nominale malgré les variations de la basse tension d'alimentation Valim, et une température du transformateur traduisant un fonctionnement de celui-ci avec un rendement optimisé.

Mais on peut encore aller plus loin, en profitant des avantages de la logique floue pour protéger le dispositif d'alimentation du magnétron contre certains dysfonctionnements.

Notamment l'algorithme peut avantageusement mais non nécessairement comporter un troisième jeu de règles de cohérence, comprenant notamment la règle R31 visible dans la table de règles de la figure 7. La fonction de ces règles est de modifier le paramètre µ en fonction de l'évolution du courant traversant l'interrupteur commandé S afin de protéger le transistor MOS qui le constitue contre les sur-intensités. Plus particulièrement la modification consiste à diminuer la valeur du paramètre µ lorsque la valeur de ce courant atteint une valeur susceptible d'endommager l'interrupteur commandé.

L'algorithme à logique floue peut aussi comporter un quatrième jeu de règles de cohérence, comprenant notamment la règle R41 visible dans la table de la figure 7, dont la fonction est de diminuer le paramètre *µ* lorsque la haute tension d'alimentation Vm est très élevée, ce qui traduit une surtension susceptible d'endommager le magnétron.

Enfin, on peut encore tirer avantage de la gestion par un algorithme à logique floue pour permettre un démarrage progressif du fonctionnement du magnétron. En effet, pour des températures faibles comme celles que l'on peut avoir au démarrage, le magnétron ne se comporte pas comme le circuit équivalent étudié ci-dessus en regard des figures 4 et 5, mais il se comporte comme un court-circuit. Il est nécessaire d'attendre que sa température s'élève quelque peu pour l'alimenter avec une haute tension d'alimentation ayant une valeur égale à la valeur en fonctionnement normal, à savoir de l'ordre de 1000 volts. C'est à dire qu'il ne faut pas appliquer immédiatement la valeur du paramètre du signal de commande nécessaire pour atteindre une haute tension d'alimentation Vm requise pour fournir au magnétron la puissance dont il a besoin, mais qu'il convient au contraire de maintenir ce paramètre à une valeur inférieure.

A cet effet, l'algorithme peut avantageusement mais non nécessairement comporter un cinquième jeu de règles telles que les règles R51 à R54 visibles dans la table de règles de la figure 7 dont la fonction est de maintenir la valeur du paramètre à une valeur faible au démarrage du magnétron si la température ambiante est inférieure à une valeur considérée comme normale en régime de fonctionnement établi (fonctionnement normal du magnétron), et ce malgré le fait que la haute tension d'alimentation Vm soit inférieure à la valeur normale.

## Revendications

1. Dispositif d'alimentation d'une charge non linéaire, notamment un magnétron (M) pour four micro-ondes, du type comportant un transformateur résonant (T) comprenant un interrupteur commandé (S) pour délivrer une haute tension d'alimentation (Vm) aux bornes (B1,B2) de la charge à partir d'une basse tension d'alimentation (Valim),
**caractérisé en ce qu'**il comprend :
- des moyens (L12,R1,A1) délivrant un signal de mesure (SM1) du niveau de la haute tension d'alimentation (Vm) ;
- des moyens (20) délivrant un signal de mesure (SM2) du niveau de la basse tension d'alimentation (Valim) ;
- des moyens (R3,CS3,A3) délivrant un signal de mesure (SM3) de la température ambiante du transformateur ;
- une unité de gestion (100) à logique floue qui accepte lesdits signaux de mesure (SM1,SM2,SM3) comme variables d'entrée et produit comme variable de sortie la valeur d'un paramètre (µ) d'un signal de commande de l'interrupteur commandé, ladite unité étant pilotée par un algorithme à logique floue qui comporte un premier jeu de règles de cohérence permettant d'augmenter ledit paramètre (µ) lorsque la basse tension d'alimentation (Valim) diminue et réciproquement, et un deuxième jeu de règles de cohérence permettant de diminuer ledit paramètre (µ) lorsque la température ambiante augmente, et réciproquement.

2. Dispositif selon la revendication 1, **caractérisé en ce que** le signal de commande de l'interrupteur commandé est un signal modulé en largeur d'impulsion et **en ce que** le paramètre de sortie de l'unité de gestion à logique floue (100) est la valeur du rapport cyclique de ce signal.

3. Dispositif selon la revendication 1 ou selon la revendication 2, **caractérisé en ce qu'**il comprend en outre des moyens (BC,R4,A4) de mesure du courant circulant dans l'interrupteur commandé (S), et **en ce que** l'algorithme à logique floue comporte un troisième jeu de règles de cohérence permettant de diminuer la valeur du paramètre (µ) lorsque la valeur du ce courant atteint une valeur susceptible d'endommager l'interrupteur commandé.

4. Dispositif selon l'une des revendications précédentes, **caractérisé en ce que** l'algorithme à logique floue comporte un quatrième jeu de règles de cohérence (R31,R32) pour diminuer le paramètre (*µ*) lorsque la haute tension d'alimentation (Vm) présente une surtension susceptible d'endommager le magnétron.

5. Dispositif selon l'une des revendications précédentes, **caractérisé en ce que** l'algorithme à logique floue comporte un cinquième jeu de règles de cohérence permettant de maintenir la valeur du paramètre à une valeur faible au démarrage du magnétron, si la température ambiante est inférieure à une valeur considérée comme normale en régime de fonctionnement établi.

6. Dispositif selon l'une des revendications précédentes, **caractérisé en ce que** l'unité de gestion est un microcontrôleur à logique floue comportant une mémoire dans laquelle les règles de cohérence et les fonctions d'appartenance mises en oeuvre par l'algorithme à logique floue sont mémorisées.

## Patentansprüche

1. Netzteil mit nicht linearer Spannung, insbesondere ein Magnetron (M) für vier Mikrowellen, in der Bauart mit einem Resonanztransformator (T), der einen gesteuerten Schalter (S) aufweist, um eine hohe Netzspannung (Vm) ausgehend von einer niedrigen Netzspannung (Valim) an die Ladeklemmen (B1, B2) zu liefern,
**dadurch gekennzeichnet, dass** diese umfasst:
- eine Einrichtung (L12, R1, A1), die ein Messsignal (SM1) auf dem Niveau der hohen Netzspannung (Vm) liefert;
- eine Einrichtung (20), die ein Messsignal (SM2) auf dem Niveau der niedrigen Netzspannung (Valim) liefert;
- eine Einrichtung (R3, CS3, A3), die ein Messsignal (SM3) von der Umgebungstemperatur des Transformator liefert;
- eine Steuereinheit (100) mit unscharfer Logik, die die Messsignale (SM1, SM2, SM3) als Eingangsvariablen akzeptiert und als Ausgangsvariable den Wert eines Parameters (µ) eines Steuersignals für den gesteuerten Schalter erzeugt, wobei die Einheit durch einen Algorithmus mit unscharfer Logik gesteuert wird, der aufweist einen ersten Satz von Kohärenzregeln, mit denen der Parameter (µ) erhöht werden kann, wenn sich die niedrige Netzspannung (Valim) vermindert und umgekehrt, und einen zweiten Satz von Kohärenzregeln, mit denen der Parameter (µ) vermindert werden kann, wenn die Umgebungstemperatur steigt, und umgekehrt.

2. Gerät nach Anspruch 1, **dadurch gekennzeichnet, dass** das Steuersignal für den gesteuerten Schalter ein in der Impulsgröße moduliertes Signal ist und dass der Ausgangsparameter der Steuereinheit mit unscharfer Logik (100) der Wert des zyklischen Abstandes dieses Signals ist.

3. Gerät nach Anspruch 1 oder nach Anspruch 2, **dadurch gekennzeichnet, dass** dieses ferner eine Einrichtung (BC, R4, A4) zum Messen des in dem gesteuerten Schalter (S) fließenden Stromes aufweist, und dass der Algorithmus mit unscharfer Logik einen dritten Satz von Kohärenzregeln aufweist, mit denen der Wert des Parameters (µ) vermindert werden kann, wenn der Wert dieses Stromes einen Wert erreicht, der im Stande ist, den gesteuerten Schalter zu beschädigen.

4. Gerät nach einem der vorstehenden Ansprüche, **dadurch gekennzeichnet, dass** der Algorithmus mit unscharfer Logik einen vierten Satz an Kohärenzregeln aufweist (R31, R32), um den Parameter (µ) zu vermindern, wenn die hohe Netzspannung (Vm) eine Überspannung zeigt, die im Stande ist, das Magnetron zu beschädigen.

5. Gerät nach einem der vorstehenden Ansprüche, **dadurch gekennzeichnet, dass** der Algorithmus mit unscharfer Logik einen fünften Satz von Kohärenzregeln aufweist, mit denen der Wert des Parameters auf einem für das Starten des Magnetrons zu schwachen Wert gehalten wird, wenn die Umgebungstemperatur unter einem als im etabierten Funktionsbetrieb normal angesehenen Wert liegt.

6. Gerät nach einem der vorstehenden Ansprüche, **dadurch gekennzeichnet, dass** die Steuereinheit ein Mikrosteuerbaustein mit unscharfer Logik ist, der einen Speicher aufweist, in welchem die Kohärenzregeln und die durch den Algorithmus mit unscharfer Logik benutzten Zusatzfunktionen gespeichert sind.

## Claims

1. Power supply for a non-linear load, especially a magnetron (M) for a microwave oven, of the type comprising a resonant transformer (T) having a controlled switch (S) for delivering a high supply voltage (Vₘ) to the terminals (B1, B2) of the load from a low supply voltage (Vₛᵤₚ)
**characterized in that** it comprises:
- means (L12, R1, A1) delivering a measurement signal (SM1) as a measure of the level of the high supply voltage (Vₘ);
- means (20) delivering a measurement signal (SM2) as a measure of the level of the low supply voltage (Vₛᵤₚ);
- means (R3, CS3, A3) delivering a measurement signal (SM3) as a measure of the ambient temperature of the transformer;
- a fuzzy-logic management unit (100) that receives the said measurement signals (SM1, SM2, SM3) as input variables and produces, as output variable, the value of a parameter (µ) of a control signal for the controlled switch, the said unit being controlled by a fuzzy-logic algorithm that comprises a first set of consistency rules allowing the said parameter (µ) to be increased when the low supply voltage (Vₛᵤₚ) decreases and vice versa, and a second set of consistency rules allowing the said parameter (µ) to be reduced when the ambient temperature increases, and vice versa.

2. Power supply according to Claim 1, **characterized in that** the control signal for the controlled switch is a pulse-width-modulated signal and **in that** the output parameter of the fuzzy-logic management unit (100) is the value of the duty cycle of this signal.

3. Power supply according to Claim 1 or Claim 2, **characterized in that** it furthermore comprises means (BC, R4, A4) for measuring the current flowing in the controlled switch (S) and **in that** the fuzzy-logic algorithm includes a third set of consistency rules allowing the value of the parameter (µ) to be reduced when the value of this current reaches a value liable to damage the controlled switch.

4. Power supply according to one of the preceding claims, **characterized in that** the fuzzy-logic algorithm includes a fourth set of consistency rules (R31, R32) for reducing the parameter (µ) when the high supply voltage (Vₘ) has an overvoltage liable to damage the magnetron.

5. Power supply according to one of the preceding claims, **characterized in that** the fuzzy-logic algorithm includes a fifth set of consistency rules allowing the value of the parameter to be maintained at a low value at the start-up of the magnetron, if the ambient temperature is below a value considered as normal under established operating conditions.

6. Power supply according to one of the preceding claims, **characterized in that** the management unit is a fuzzy-logic microcontroller having a memory in which the consistency rules and the associated functions implemented by the fuzzy-logic algorithm are stored.
